# EUROPÄISCHE PATENTANMELDUNG

(11) **EP 2 873 996 A1**
(43) Veröffentlichungstag der Anmeldung: **20.05.2015**
(21) Anmeldenummer: 13000892.3
(22) Anmeldetag: 22.02.2013
(51) Int. Cl.: G02B 21/24, G01D 5/347

(54) **Einrichtung zur Positionierung optischer Komponenten an einem Mikroskop**

(30) Priorität: 09.03.2012 DE 102012004901
(71) Anmelder: Carl Zeiss Microscopy GmbH, 07745 Jena (DE)
(72) Erfinder: Becker, Klaus, 37339 Breitenworbis (DE); Nolte, Frank, 37120 Bovenden (DE)
(74) Vertreter: Scholze, Humbert

(57) **Zusammenfassung**

Die Erfindung betrifft eine Einrichtung zur Positionierung optischer Komponenten an einem Mikroskop, insbesondere für Objektive, Filter Strahlteiler, Spiegel und Linsen, umfassend eine drehbar gelagerte Revolverscheibe (1) mit mehreren zur Aufnahme der optischen Komponenten dienenden, in den Strahlengang des Mikroskops einschwenkbaren Öffnungen (R1,R2,R3,R4,R5,R6) sowie einem Antriebsmotor (7) zur Erzeugung der Drehbewegung der Revolverscheibe (1. Erfindungsgemäß ist auf der Revolverscheibe (1) konzentrisch zur Drehachse (2) eine kreisförmige, inkrementelle Codierung (3) aufgebracht, die zum Zwecke der Referenzierung eine Indexmarkierung (4) aufweist. Ferner ist ein an den Umfang der Revolverscheibe (1) angepasster, zur Abtastung der inkrementellen Codierung (3) dienender, Lesekopf (5) vorhanden, der über eine Regeleinheit (6) mit dem Antriebsmotor (7) in Verbindung steht.

## Beschreibung

Die Erfindung betrifft eine Einrichtung zur Positionierung optischer Komponenten an einem Mikroskop, insbesondere für Objektive, Filter Strahlteiler und Spiegel, umfassend eine drehbar gelagerte Revolverscheibe mit mehreren zur Aufnahme der optischen Komponenten dienenden, in den Strahlengang des Mikroskops einschwenkbaren Öffnungen sowie einem Antriebsmotor zur Erzeugung der Drehbewegung der Revolverscheibe.

Einrichtungen mit einem Revolver zum exakten Positionieren von optischen Komponenten im Strahlengang sind seit langem Bestandteil von Mikroskopen.

Hierbei ist die exakte Positionierung mit einer sehr hohen Wiederholgenauigkeit und Langzeitstabilität eine Grundbedingung.

Bei allen per Hand verstellbaren Revolvern wird jede optische Position mittels justierbarer, mechanischer Rast realisiert. Diese Rasten arbeiten mit Kugeln oder Rollen, welche in Rastkerben mittels Federkraft gedrückt werden. Dieser Vorgang stellt eine mechanische Belastung dar und führt im Laufe der Zeit zu Ungenauigkeiten auf Grund geometrisch verschlissener Rastkerben.

Solange die Revolverbewegungen nur per Hand erfolgen, ist die Rast als taktile Rückmeldung notwendig und führt erst nach langer Zeit zu den vorher beschriebenen Problemen.

Bekannte motorisch betriebene Revolver erreichen jedoch in kurzer Zeit eine deutlich höhere Anzahl von Rastvorgängen und somit auch eine kürzere Standzeit mit exakter Positionierung.

Aus diesem Grund gibt es eine Vielzahl von Lösungen zur Vermeidung der mechanischen Rast.

Bei einer bekannten Variante wird der Rastvorgang elektromechanisch durch Magnete, oder Motoren herbeigeführt. Dabei wird die Rastkerbe weniger belastet. Nachteilig sind jedoch ein relativ hoher technischer Aufwand und eine deutlich verlängerte Positionierzeit.

Ferner sind Lösungen bekannt, bei denen die Rast durch magnetische Haltekräfte ersetzt wird. Ein wesentlicher Vorteil ist hierbei die Verschleißfreiheit. Wegen der recht ungenauen Positionierung ist aber diese Variante nur bedingt einsetzbar.

Um eine exakte Positionierung zu realisieren sind Positioniersteuerungen erforderlich. Hier ist es notwendig, die exakte Revolverposition zu detektieren und den Revolver mittels Regelung und Motor in dieser Position zu halten. Die Detektion der exakten Position ist hierbei von entscheidender Bedeutung.

Hier kommt beispielsweise eine Magnetfelddetektion zum Einsatz, wobei der Umfang des Revolvers strichweise umpolarisiert und per Magnetlesekopf ausgewertet wird. Nachteilig hierbei sind die Kosten und der Fakt, dass sich die Oberfläche magnetisieren lassen muss.

Ferner sind optische Positionserkennungen bekannt, bei der jede Position mit einem schmalen Schlitz markiert und per Lichtschranke erkannt wird. Zusätzlich ist eine Grobpositionierung mittels Inkrementalgeber am Motor notwendig. Eine hochgenaue Positionierung ist hierbei nur schwer erreichbar, da der Schlitzbreite Grenzen gesetzt sind.

Darüber hinaus ist eine Mischung aus optischen und magnetischen Verfahren denkbar, bei denen eine Vorpositionierung mit einem Inkrementalgeber am Motor vorgenommen wird und die Feinpositionierung mit Hilfe von Hallsensoren und über Differenzbildungen erfolgt.

Bei einer weiteren bekannten Lösung bilden Revolver und Antrieb eine Einheit, wobei der Revolver gleich der Rotor des Antriebsmotors ist.

Die Ansteuerung erfolgt ähnlich wie bei einem Schrittmotor.

Alle bekannten Lösungen, die mechanische Rastvorgänge vermeiden, haben den Nachteil, dass die Kraftübertragung zwischen Motor mit Inkrementalgeber und Revolver steif ausgelegt werden muss, um möglichst keine Umkehrlose zu haben. Der mechanische Aufbau ist dabei relativ aufwendig und voluminös.

Ferner ist die Markierung der einzelnen Revolverpositionen starr und erfordert viel Aufwand.

Hinzu kommt, dass zwei Regelkreise für die Grobpositionierung am Motor sowie für die Feinpositionierung am Revolver notwendig sind.

Ausgehend von den Nachteilen der Lösungen des Standes der Technik, liegt der Erfindung die Aufgabe, eine Einrichtung zur Positionierung optischer Komponenten an einem Mikroskop dahingehend weiter zu entwickeln, dass mit einem einfachen mechanischen Aufbau eine spielfreie, hochgenaue Positionierung optischer Komponenten mit einer hohen Positioniergeschwindigkeit möglich ist.

Diese Aufgabe wird mit einer Einrichtung der eingangs beschriebenen Art durch die Merkmale des Patentanspruchs 1 gelöst. Vorteilhafte Ausgestaltungen sind in den Unteransprüchen 2 bis 6 angegeben.

Erfindungsgemäß ist auf der Revolverscheibe konzentrisch zur Drehachse eine kreisförmige, inkrementelle Codierung aufgebracht, die zum Zwecke der Referenzierung eine Indexmarkierung aufweist.

Zur Abtastung der inkrementellen Codierung dient ein, zweckmäßigerweise am Mikroskopstativ befestigter, Lesekopf, der über eine Regeleinheit mit dem Antriebsmotor in Verbindung steht. Der Lesekopf kann auch Bestandteil der jeweiligen Baugruppen selbst sein.

Vorteilhafterweise hat der Lesekopf einen interpolierten Signalausgang, der eine hochgenaue Positionsbestimmung der zur Aufnahme von optischen Komponenten dienenden Öffnungen ermöglicht.

Ferner ist es von Vorteil, wenn die inkrementelle Codierung als hochauflösende Strichcodescheibe ausgebildet und am äußeren Durchmesser auf der Revolverscheibe aufgeklebt ist.

Der Inkrementalgeber ist somit Bestandteil der Revolverscheibe, so dass der Aufbau sehr flach ist.

In einer weiteren vorteilhaften Ausgestaltung wird die Drehbewegung vom Antriebsmotor auf die Revolverscheibe über einen Zahnriemen übertragen, der eine nahezu spielfreie Übertragung ermöglicht.

Die erfindungsgemäße Lösung ist durch einen relativ einfachen mechanischen Aufbau in der Lagerung der Revolverscheibe sowie der Kraftübertragung charakterisiert.

Die Positionsbestimmung ist spielfrei und hochgenau, da am Ort des Geschehens gemessen wird.

Infolge dessen, dass der gesamte Aufbau nur eine geringe Masse hat, lassen sich sehr hohe Positioniergeschwindigkeiten erzielen.

Im Gegensatz zu den Lösungen des Standes der Technik können die Öffnungen (Revolveraugen) zur Aufnahme der optischen Komponenten in der Revolverscheibe an beliebigen Stellen positioniert werden, da keine Position fest markiert werden muss.

Die Einrichtung hat nahezu keinen Verschleiß. Die Lebensdauer wird nur durch die Komponenten Lagerung der Revolverscheibe, Antriebsmotor und Zahnriemen bestimmt.

Nachfolgend wird die erfindungsgemäße Einrichtung anhand eines Ausführungsbeispiels näher beschrieben.

Die dazugehörende Figur zeigt eine Revolverscheibe 1 mit 6 zur Aufnahme von optischen Komponenten dienenden Öffnungen (Revolveraugen) R1, R2, R3, R4, R5, R6, die konzentrisch zur Drehachse 2 der Revolverscheibe 1 gleichmäßig verteilt eingebracht sind.

Am äußeren Durchmesser der Revolverscheibe 1 ist, ebenfalls konzentrisch zur Drehachse 2, eine als Strichcodescheibe ausgebildete inkrementelle hochauflösende Codierung 3 aufgebracht.

Im vorliegenden Beispiel wurde diese auf die Revolverscheibe 1 aufgeklebt, wobei auch andere Fixiermöglichkeiten denkbar sind.

Zum Zwecke der Referenzierung der Position der Revolverscheibe 1 befindet sich auf der Strichcodescheibe eine Indexmarkierung 4.

Die Abtastung der inkrementellen Codierung 3 zur Positionierung der Revolverscheibe 1 erfolgt über einen Lesekopf 5 mit einem interpolierten Signalausgang.

Die Signale werden über eine Regeleinheit 6 an einen Antriebsmotor 7 weitergeleitet. Über einen Zahnriemen 8 wird die Drehbewegung des Antriebsmotors 7 auf die Drehachse 2 der Revolverscheibe 1 übertragen, so dass die Drehlage (Position) der Revolverscheibe 1 in gewünschter Art und Weise verändert wird.

### Bezugszeichenliste

- 1: Revolverscheibe
- 2: Drehachse
- 3: Codierung
- 4: Indexmarkierung
- 5: Lesekopf
- 6: Regeleinheit
- 7: Antriebsmotor
- 8: Zahnriemen
- R1 bis R6: Öffnung (Revolverauge)

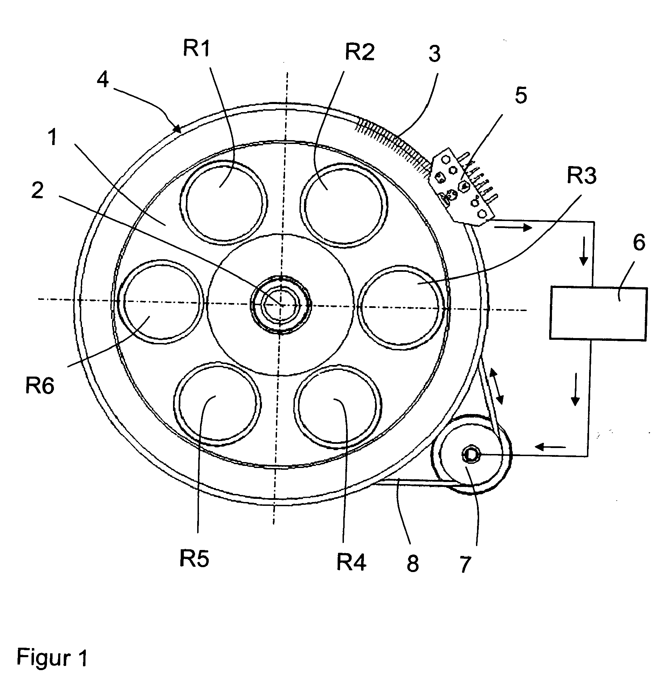

## Patentansprüche

1. Einrichtung zur Positionierung optischer Komponenten an einem Mikroskop, insbesondere für Objektive, Filter Strahlteiler, Spiegel und Linsen, umfassend eine drehbar gelagerte Revolverscheibe (1) mit mehreren zur Aufnahme der optischen Komponenten dienenden, in den Strahlengang des Mikroskops einschwenkbaren Öffnungen (R1,R2,R3,R4,R5,R6) sowie einem Antriebsmotor (7) zur Erzeugung der Drehbewegung der Revolverscheibe (1), **dadurch gekennzeichnet, dass** auf der Revolverscheibe (1) konzentrisch zur Drehachse (2) eine kreisförmige, inkrementelle Codierung (3) aufgebracht ist, die zum Zwecke der Referenzierung eine Indexmarkierung (4) aufweist und ein an den Umfang der Revolverscheibe (1) angepasster, zur Abtastung der inkrementellen Codierung (3) dienender, Lesekopf (5) vorhanden ist, der über eine Regeleinheit (6) mit dem Antriebsmotor (7) in Verbindung steht.

2. Einrichtung zur Positionierung optischer Komponenten an einem Mikroskop nach Anspruch 1, **dadurch gekennzeichnet, dass** die inkrementelle Codierung (3) als Strichcodescheibe ausgebildet und am äußeren Durchmesser auf die Revolverscheibe (1) aufgeklebt ist.

3. Einrichtung zur Positionierung optischer Komponenten an einem Mikroskop nach den Ansprüchen 1 und 2, **dadurch gekennzeichnet, dass** die inkrementelle Codierung (3) hochauflösend ist.

4. Einrichtung zur Positionierung von optischen Komponenten an einem Mikroskop nach Anspruch 1, **dadurch gekennzeichnet, dass** der Lesekopf (5) am Mikroskopstativ befestigt ist.

5. Einrichtung zur Positionierung optischer Komponenten an einem Mikroskop nach den Ansprüchen 1 und 4, **dadurch gekennzeichnet, dass** der Lesekopf (5) einen programmierbaren interpolierten Signalausgang besitzt.

6. Einrichtung zur Positionierung von optischen Komponenten an einem Mikroskop nach Anspruch 1, **dadurch gekennzeichnet, dass** zum Zwecke der Einleitung der Drehbewegung der Revolverscheibe (1) der Antriebsmotor (7) mit der Drehachse (2) über einen Zahnriemen (8) verbunden ist.
